# EUROPÄISCHE PATENTSCHRIFT

(11) **EP 0 735 265 B1**
(45) Veröffentlichungstag und Bekanntmachung des Hinweises auf die Patenterteilung: **10.03.1999**
(21) Anmeldenummer: 95120135.9
(22) Anmeldetag: 20.12.1995
(51) Int. Cl.: F02M 31/135

(54) **Heizmodul für eine Verbrennungskraftmaschine**
Heating device for a combustion engine
Module de chauffage pour un moteur à combustion

(30) Priorität: 30.03.1995 DE 19511685
(43) Veröffentlichungstag der Anmeldung: 02.10.1996
(73) Patentinhaber: Firma Carl Freudenberg, 69469 Weinheim (DE)
(72) Erfinder: Meinig, Uwe, D-69469 Weinheim (DE); Spies, Karl-Heinz, Dr., D-69488 Birkenau (DE); Heinemann, Joachim, D-69517 Gorxheimertal (DE)

(56) Entgegenhaltungen:
- EP-A- 0 343 652
- EP-A- 0 570 919
- DE-A- 4 314 283
- FR-A- 2 315 011
- US-A- 4 390 000
- US-A- 4 398 522
- US-A- 4 717 808

## Beschreibung

### Beschreibung:

Die Erfindung betrifft ein Heizmodul für eine gemischverdichtende Verbrennungskraftmaschine, das zwischen einem Ansaugrohr und einem Zylinderkopf der Verbrennungskraftmaschine angeordnet ist, wobei das Ansaugrohr, das Heizmodul und der Zylinderkopf zumindest einen Saugkanal begrenzen, in dem zumindest ein elektrisch beheizbares Heizelement angeordnet ist, das einen Bestandteil des Heizmoduls bildet, wobei das Heizelement mit Anschlußklemmen an eine elektrische Stromquelle anschließbar ist und wobei die Fügeflächen zwischen dem Ansaugrohr, dem Heizmodul und dem Zylinderkopf jeweils durch zumindest eine Dichtung abgedichtet sind.

Ein solches Heizmodul ist aus der DE 43 14 283 A1 bekannt. Das elektrisch beheizbare Heizelement weist einen quer zur Strömungsrichtung wannenförmigen Querschnitt auf und kann mit einem Flansch verbunden sein, der einen Bestandteil des Saugkanals bildet. Der Flansch weist eine, in Strömungsrichtung betrachtet, vergleichsweise große Dicke auf, um eine von einem Heizmedium durchströmbare Leitung umschließen zu können. Die Heizelemente können zusätzlich zu der elektrischen Beheizung durch ein vom Motor bereits erwärmtes Medium, beispielsweise durch Kühlwasser, erwärmt werden. Bereits wenige Minuten nach dem Kaltstart des Motors kann die elektrische Beheizung des Heizelements daher abgeschaltet werden, wobei zur weiteren Beheizung nur noch das ohnehin erwärmte Kühlwasser benutzt wird. Ferner kann der Zwischenflansch, der die Heizelemente aufnimmt, so breit ausgeführt sein, daß die Aufnahmeflächen der Einspritzdüsen in den Flansch integriert werden können.

Aus der EP 0 343 652 A1 ist ein Flansch bekannt, bei dem die Aufhängung der Heizelemente am Flansch sehr massiv ausgeführt ist. Die starke Dimensionierung dieser Aufhängung führt zu einer Drosselung der Ansaugluft, so daß sich ein erheblicher Vollasffüllungsverlust und daraus resultierend eine Verminderung der maximal möglichen Motorleistung ergibt. Weiterhin führen die massiven Aufhängungen bei Umströmung zu Toträumen, die vom Luft/Kraftstoffgemisch nicht durchströmt werden, so daß sich insbesondere bei niedrigen Temperaturen von Ansaugluft, Heizelement und Aufhängungen wesentliche Mengen von flüssigem Kraftstoff in Strömungsrichtung gesehen hinter den Aufhängungen an der Einlaßkanalwand, den Heizelementen und den Aufhängungen ablagern. Hierdurch verschlechtern sich vor allem im dynamischen Fahrbetrieb insbesondere die HC- und CO-Emissionen. Die Verwendung eines verhältnismäßig dicken Flanschs und einer dicken, separat montierten Dichtung führen insbesondere bei Einlaßkanälen, in den die Fügeflächen zwischen dem Zylinderkopf und dem Saugrohr nicht senkrecht zu der Einlaßkanalmittellinie angeordnet sind, zu Unstetigkeiten im Kanal und fördern auf diese Weise Ansaugdrosselverluste. Neben den hieraus resultierenden konstruktiven Einschränkungen erhöht sich außerdem der konstruktive Änderungsaufwand bei der nachträglichen Applikation eines Heizflanschs an ein vorhandenes Motorenkonzept.

Der Erfindung liegt die Aufgabe zugrunde, ein Heizmodul der eingangs genannten Art derart weiterzuentwickeln, daß seine Abmessungen im wesentlichen den Abmessungen herkömmlich verwendeter Dichtungen entsprechen, die zwischen dem Ansaugrohr und dem Zylinderkopf angeordnet sind, so daß eine einfache Nachrüstung an bestehende Motorkonzepte möglich ist, daß die Fügeflächen während einer langen Gebrauchsdauer zuverlässig abgedichtet sind und daß die Montage des Heizmoduls vereinfacht wird.

Diese Aufgabe wird erfindungsgemäß durch die Merkmale von Anspruch 1 oder 2 gelöst. Auf vorteilhafte Ausgestaltungen nehmen die Unteransprüche Bezug.

Im Rahmen der vorliegenden Erfindung ist es vorgesehen, daß das Heizmodul aus zumindest einer folienartig dünnen Platte aus metallischem Werkstoff besteht, daß auf der Platte eine Leiterbahn aus elektrisch leitfähigem Werkstoff befestigt ist und dabei die Dichtungen auf der dem Ansaugrohr und der dem Zylinderkopf zugewandten Seite einstückig mit dem Heizmodul ausgebildet sind. Hierbei ist von Vorteil, daß das Heizmodul und die in Strömungsrichtung beiderseits angrenzenden Dichtungen eine vormontierbare Einheit bilden, so daß die Montage wesentlich vereinfacht ist. Die Positionierung der vormontierbaren Einheit, bestehend aus Heizmodul und Dichtungen ist in Richtung des Ansaugrohrs und des Zylinderkopfs einfach vorzunehmen, wobei die Gefahr von Montagefehlern und Undichtigkeiten durch die einfache Handhabung auf ein Minimum reduziert ist. Die Abmessungen der vormontierbaren Einheit entsprechen im wesentlichen den Abmessungen von Flachdichtungen, die bei Verbrennungskraftmaschinen ohne Saugrohrvorwärmung zwischen dem Ansaugrohr und dem Zylinderkopf angeordnet sind. Hierdurch besteht die Möglichkeit, daß bei bestehenden Motorkonzepten durch einfaches Austauschen der bestehenden Dichtung gegen das Heizmodul eine Saugrohrvorwärmung nachgerüstet werden kann, ohne daß es konstruktiver Änderungen bedarf.

Die Platten sind mit Fügeflächen versehen, die einstückig angeformte Dichtungen aus elastomerem Werkstoff aufweisen. Die Dichtungen legen sich in ausgezeichneter Weise an die angrenzenden Oberflächen von Ansaugrohr und Zylinderkopf an und dichten während einer langen Gebrauchsdauer ab.

Zumindest eine der Platten weist eine - mit Ausnahme des Querschnitts des Saugkanals - ihre Fügefläche folienartig dünn und flächig überdeckende Dichtung auf, die mit einer dem Querschnitt des Saugkanals entsprechenden Ausnehmung versehen ist. Die Dichtung kann beispielsweise auf die Fügefläche der Platte aufgespritzt werden, ohne daß auf eine fertigungstechnisch anspruchsvolle Formgebung Rücksicht genommen zu werden braucht. Die mechanische Beanspruchung auf den elastomeren Werkstoff ist durch die flächige Überdeckung der Platten und die daraus resultierende große Fläche nur vergleichsweise gering.

Eine andere Lösung besteht darin, daß zumindest eine der Platten mit einem im wesentlichen wulstförmigen Dichtvorsprung versehen ist, der auf seiner der Fügefläche der Platte abgewandten Seite eine Dichtfläche aufweist und daß der Dichtvorsprung entlang der Außenkontur der Platte angeordnet ist und den Saugkanal dichtend umschließt.

Der Dichtvorsprung kann zweiteilig ausgebildet sein, wobei ein erster Teil entlang der Außenkontur der Platte angeordnet ist und ein zweiter Teil den Saugkanal dichtend umschließt.

Im Abstand zur Außenkontur und den Kanaldurchtritten wird ein Dichtvorsprung aus elastomerem Werkstoff aufgedruckt.

Die vorteilhaften Abmessungen des Heizmoduls werden durch den sandwichartigen Aufbau erzielt, wobei bevorzugt zwei folienartig dünne Platten aus metallischem Werkstoff zur Anwendung gelangen, zwischen denen eine sehr dünne Leiterbahn angeordnet ist, wobei die Dichtungen auf der dem Zylinderkopf und dem Ansaugrohr zugewandten Seite ebenfalls dünn und einstückig mit den Platten ausgebildet sind.

Die Leiterbahn besteht bevorzugt aus Kupfer und einer Isolierschicht, beispielsweise aus Polyimid oder einem Klebevlies und ist mit zumindest einer der Platten adhäsiv verbunden. Bevorzugt ist die Leiterbahn mit beiden Platten verklebt. Hierbei ist von Vorteil, daß die Leiterp!atte vollständig von dem metallischen Werkstoff der Platten umschlossen und dadurch vor äußeren Einflüssen zuverlässig geschützt ist.

Die Platten können eine Dicke von 0,2 bis 1,5 mm, bevorzugt von ~,5 bis 1 mm aufweisen und aus einer wärmeleitenden Metallegierung bestehen. Die wärmeleitende Metallegierung ist bevorzugt eine Aluminiumlegierung, wobei davon abweichende Legierungen ebenfalls zur Anwendung gelangen können. Hierbei ist von Vorteil, daß die Platten einfach und problemlos umgeformt werden können. Außerdem weist das gesamte Heizmodul nur ein geringes Gewicht auf, was im Hinblick auf die Wirkung der verhältnismäßig hohen Schwingbeschleunigung an der Verbrennungskraftmaschine von hervorzuhebendem Vorteil ist. Dadurch, daß das Heizmodul und üblicherweise in diesem Bereich verwendete Dichtungen nahezu ein übereinstimmendes Gewicht aufweisen, wird die Schwingungscharakteristik der Verbrennungskraftmaschine bei Austausch der bestehenden Dichtung gegen das Heizmodul nicht negativ beeinflußt.

Eine Umspritzung der Außenkontur und der Kanaldurchtritte ist ebenfalls möglich. Hierdurch läßt sich eine innige Verbindung der beiden Flanschbleche verwirklichen.

Die erfindungsgemäßen Heizmodule werden nachfolgend anhand der beigefügten Zeichnung näher erläutert. Diese zeigt die zu berücksichtigenden Einzelkomponenten in schematischer Darstellung.

In Fig. 1 ist das erfindungsgemäße Heizmodul im eingebauten Zustand gezeigt.

In Fig. 2 ist ein erstes Ausführungsbeispiel eines erfindungsgemäßen Heizmoduls für eine Vierzylinder-Verbrennungskraftmaschine gezeigt.

In Fig. 3 ist das Heizmodul aus Fig. 2 entlang der Linie A-A geschnitten gezeigt.

In Fig. 4 ist das Heizmodul aus den Fig. 2 und 3 entlang der Linie B-B geschnitten gezeigt.

In Fig. 5 ist ein zweites Ausführungsbeispiel eines Heizmoduls gezeigt, bei dem die Abdichtung der Flanschfläche von der entsprechenden Abdichtung des Heizmoduls aus den Fig. 2 bis 4 abweicht.

In Fig. 6 ist das Heizmodul aus Fig. 5 entlang der Linie C-C geschnitten dargestellt.

In Fig. 7 ist das Heizmodul aus den Fig. 5 und 6 entlang der Linie D-D geschnitten gezeigt.

In Fig. 8 ist ein drittes Ausführungsbeispiel eines Heizmoduls gezeigt, das von den Fig. 2 und 5 abweichende Dichtungen aufweist.

In Fig. 9 ist der Schnitt E-E aus Fig. 8 gezeigt.

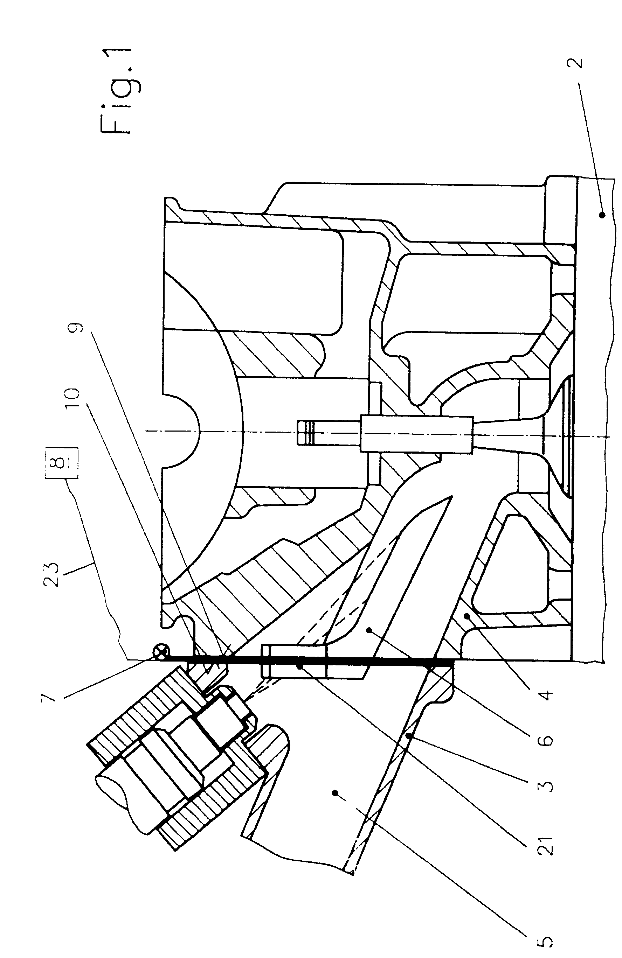

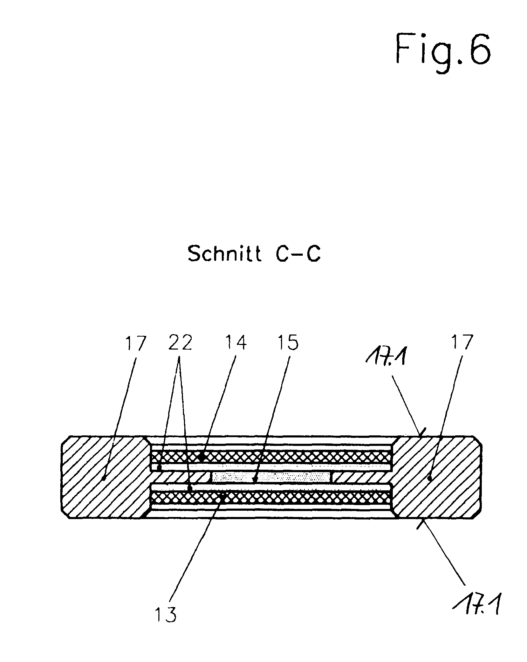

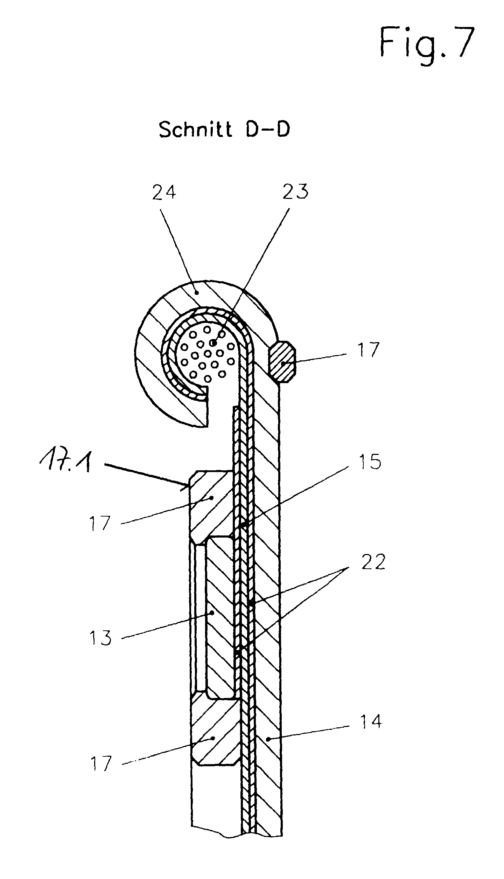

In den Fig. 1 bis 9 sind drei Ausführungsbeispiele von Heizmodulen gezeigt, wobei jedes Heizmodul 1 für eine gemischverdichtende Vierzylinder-Verbrennungskraftmaschine 2 vorgesehen ist. Jedes der hier gezeigten Heizmodule 1 ist zwischen einem Ansaugrohr 3 und einem Zylinderkopf 4 der Verbrennungskraftmaschine 2 angeordnet, wobei die Saugkanäle 5 eines jeden Zylinders durch das Ansaugrohr 3, das Heizmodul 1 und den Zylinderkopf 4 führen. Einen Bestandteil des Heizmoduls 1 bilden die elektrische beheizten Heizelemente 6, die mit Anschlußklemme 7 versehen und an eine elektrische Stromquelle 8 angeschlossen sind. Das Heizmodul 1 ist mit Dichtungen 11, 12 versehen, die die Fügeflächen 9, 10 in Richtung des Ansaugrohrs 3 und des Zylinderkopfs 4 abdichten. Das Heizmodul 1 besteht in jedem der Ausführungsbeispiele aus zwei folienartig dünnen Platten 13, 14, die aus einer Aluminiumlegierung bestehen. Zwischen den Platten 13, 14 ist eine Leiterbahn 15 aus elektrisch leitfähigem Werkstoff angeordnet, die adhäsiv mit den beiden Platten 13, 14 verbunden ist. In Strömungsrichtung beiderseits des Heizmoduls 1 sind Dichtungen 11, 12 angeordnet, die das Heizmodul in Richtung des Ansaugrohrs 3 und in Richtung des Zylinderkopfs 4 abdichten. Die Platten 13, 14 weisen in diesem Ausführungsbeispiel eine Dicke von jeweils 0,5 mm auf.

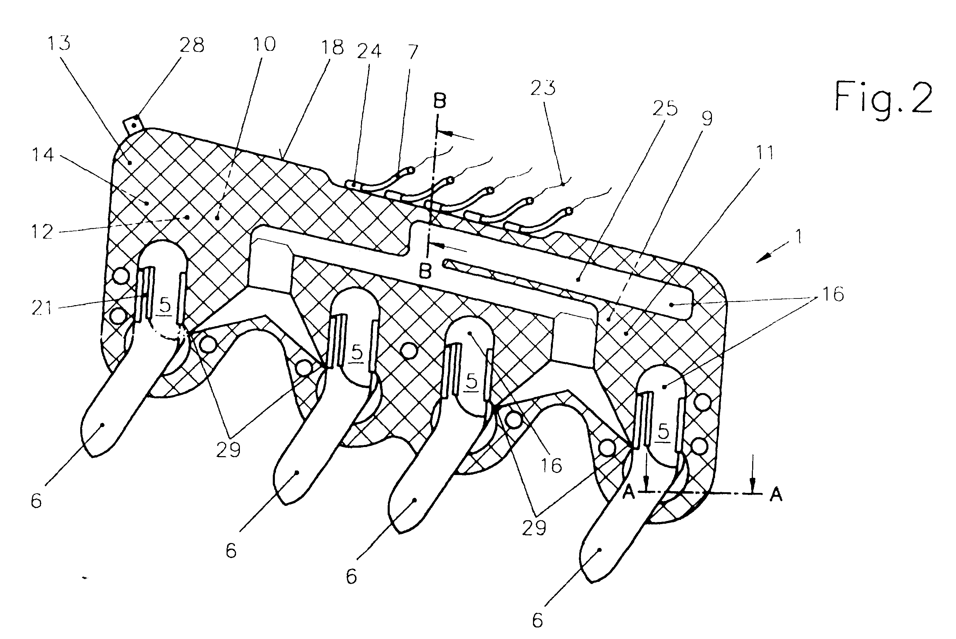

In Fig. 2 ist ein erstes Ausführungsbeispiel eines erfindungsgemäßen Heizmoduls 1 gezeigt, bei dem die Fügeflächen 9, 10 mit einstückig angeformten Dichtungen 11, 12 aus elastomerem Werkstoff versehen sind. Die Dichtungen 11, 12 sind folienartig dünn ausgebildet und überdecken die Flanschflächen 9, 10 - mit Ausnahme des Querschnitts des Saugkanals 5 und in diesem Beispiel mit Ausnahme des Zufuhr- und Verteilungsquerschnitts für Sekundärgase, beispielsweise Gase aus der Kurbelgehäuseentlüftung oder aus der Tankentlüftung oder rückgeführtes Abgas flächig. Entlang der Außenkontur 18 der Platten 13, 14 und umfangsseitig um den Saugkanal 5 sowie entlang der Begrenzung der Zuführung 25 für das Sekundärgas, weisen die Dichtungen 11, 12 eine wulstförmige Verdickung auf, um eine definierte Anlagefläche zu erzielen.

Die Aufhängung der Heizelemente 6 innerhalb des Saugkanals 5 ist besonders steif und strömungsgünstig. Die Platten 13, 14 werden im Bereich der Heizelemente 6 mit Lappen 21 versehen, die um ca. 90° in Richtung des Zylinderkopfs 4 und/oder in Richtung des Saugrohrs umgeformt sind. Entweder durch stoffschlüssige Verbindung oder durch weitere Umformschritte und eine hierdurch erzeugte Umfassung der heizelementseitigen Aufhängung wird eine Befestigung der Heizelemente 6 und elektrische Verbindung zum Heizmodul 1 erreicht. Die Festigkeit der geschilderten Aufhängung läßt sich zusätzlich zu der formschlüssigen Fixierung noch durch den Einsatz adhäsiv wirkender Medien steigern. Zur Erreichung einer hohen Schwingsteifigkeit der Verbindung ist es zweckmäßig die Berührungslinie zwischen dem flanschartigen Teil der Aufhängung und der heizelementseitigen Aufhängung im wesentlichen parallel zur Hauptanregungsrichtung des Motors anzuordnen.

Zur elektrischen Verbindung des Heizmoduls 1 mit der Stromversorgung und einer zur Anwendung gelangenden Regel- und Diagnoseeinheit kann dieses entweder mit einem Stecker oder einer Steckerleiste versehen sein. Alternativ hierzu sind die elektrischen Leiterbahnen des Flansch mit elektrischen Kabeln verbunden, die dann wiederum mit einem Stecker verbunden sind.

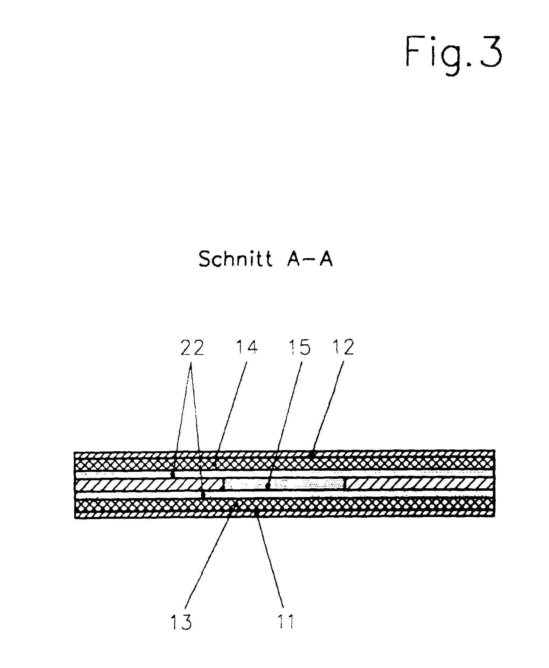

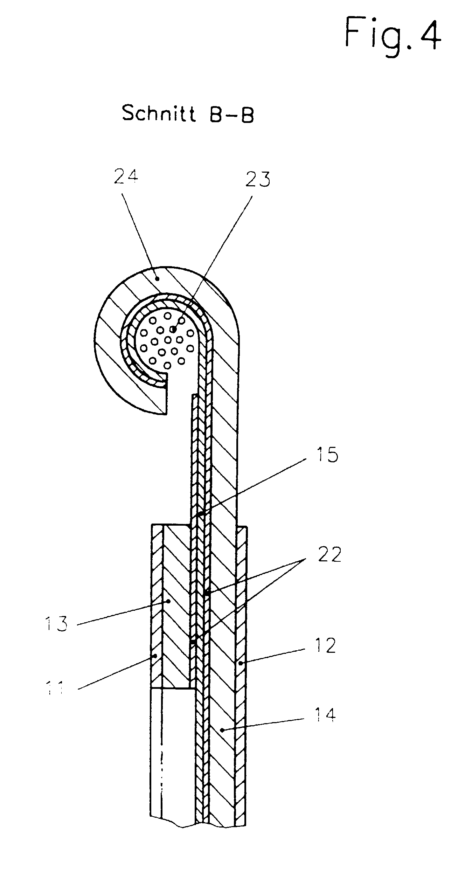

In Fig. 3 ist der Schnitt A-A und in Fig. 4 der Schnitt B-B durch das Heizmodul 1 aus Fig. 2 gezeigt.

Zwischen den Platten 13, 14 ist eine Leiterbahn 15 angeordnet, die durch einen Kleber 22 mit den beiderseits angrenzenden Platten 13, 14 verbunden ist. Das Heizmodul 1 ist mit Anschlußkabel 23 versehen, die jeweils in Blechumfassungen 24 im Bereich ihrer Kontaktierstellen gehalten sind.

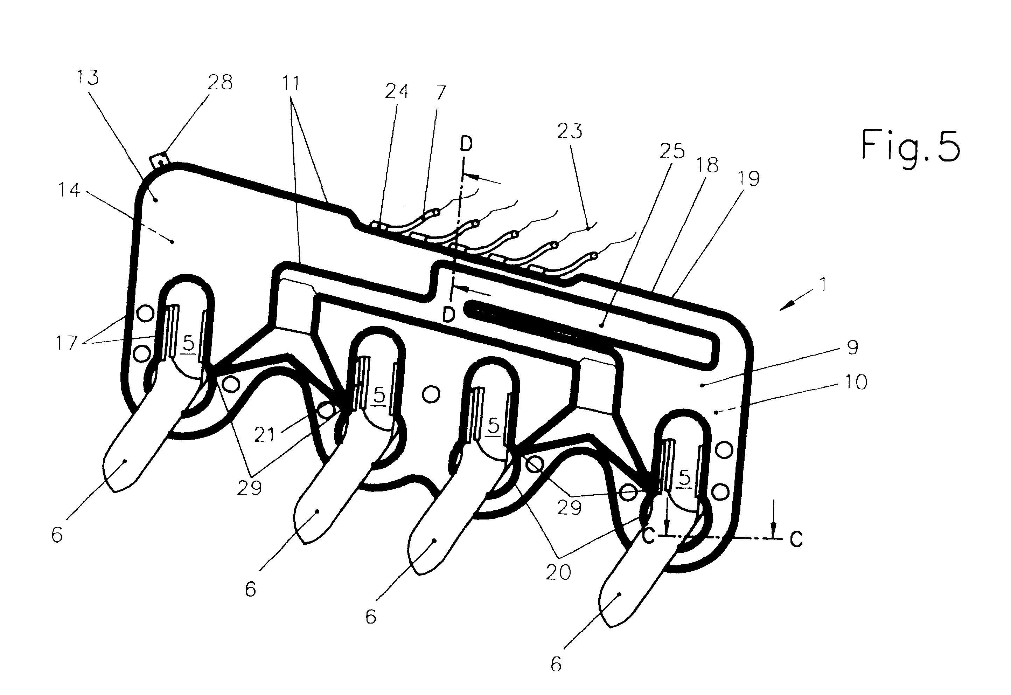

In den Fig. 5 bis 7 ist ein Heizmodul 1 gezeigt, das im wesentlichen dem Heizmodul 1 aus den Fig. 2 bis 4 entspricht. Im Gegensatz zu den Dichtungen 11, 12 aus den Fig. 2 bis 4 sind die Dichtungen 11, 12 als Dichtvorsprung 17 ausgebildet und auf ihrer der Fügefläche 9, 10 der Platte 13, 14 abgewandten Seite mit einer Dichtfläche 17.1 versehen. Der Dichtvorsprung 17 erstreckt sich entlang der Außenkontur 18 der Platten 13, 14 und umschließt jeden der Saugkanäle 5. Der Dichtvorsprung 17 ist zweiteilig ausgebildet, wobei sich der erste Teil 19 entlang der Außenkontur 18 der Platten 13, 14 erstreckt und der zweite Teil 20 die Saugkanäle dichtend umschließt. Auch in diesem Ausführungsbeispiel ist innerhalb des Heizmoduls eine Zuführung 25 für Sekundärgas vorgesehen, wobei das Sekundärgas den einzelnen Saugrohren 5 auf gleichlangen Wegen zuführbar ist.

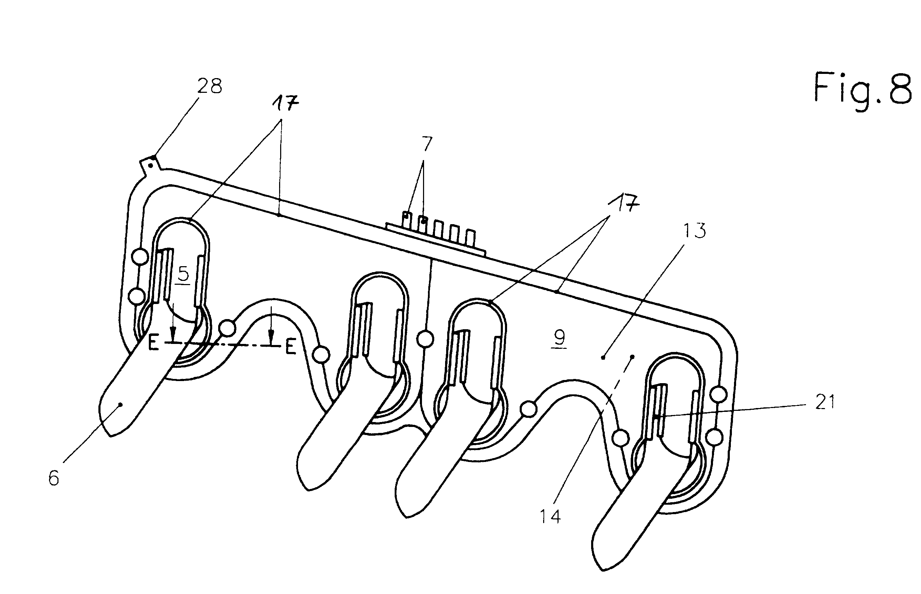

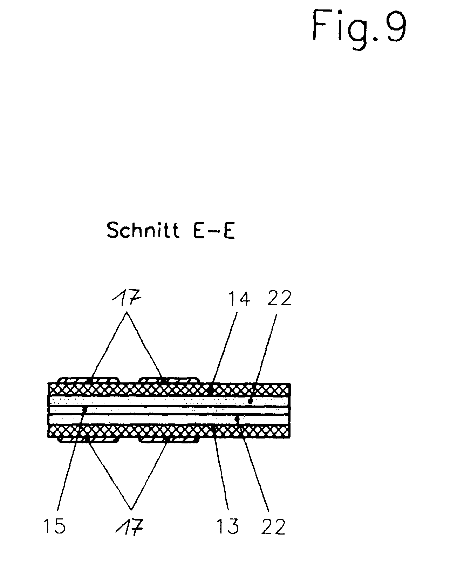

In den Fig. 8 und 9 ist ein drittes Ausführungsbeispiel eines Heizmoduls 1 gezeigt, wobei zum Anschließen einer Regel- bzw. Diagnoseeinheit mehrere Anschlußklemme 7 vorgesehen sind. Die Massekontaktfahne ist mit Bezugsziffer 28 versehen.

Die Dichtungen 11, 12 sind auf die Platten 13, 14 aufgedruckt.

## Patentansprüche

1. Heizmodul für eine gemischverdichtende Verbrennungskraftmaschine, das zwischen einem Ansaugrohr (3) und einem Zylinderkopf (4) der Verbrennungskraftmaschine (2) angeordnet ist, wobei das Ansaugrohr (3), das Heizmodul (1) und der Zylinderkopf (4) zumindest einen Saugkanal (5) begrenzen, in dem zumindest ein elektrisch beheizbares Heizelement (6) angeordnet ist, das einen Bestandteil des Heizmoduls (1) bildet, wobei das Heizmodul (1) mit Anschlußklemmen (23) an eine elektrische Stromquelle anschließbar ist, und wobei die Fügeflächen (9, 10) zwischen dem Ansaugrohr (3), dem Heizmodul (1) und dem Zylinderkopf (4) jeweils durch zumindest eine Dichtung (11, 12) abgedichtet sind, wobei das Heizmodul (1) aus zumindest einer folienartig dünnen Platte (13, 14) aus metallischem Werkstoff besteht, wobei auf der Platte (13, 14) eine Leiterbahn (15) aus elektrisch leitfähigem Werkstoff befestigt ist und wobei die Dichtungen (11, 12) auf der dem Ansaugrohr (3) und der dem Zylinderkopf (4) zugewandten Seite einstückig mit dem Heizmodul (1) ausgebildet sind, **dadurch gekennzeichnet, daß** die Platten (13, 14) mit Fügeflächen (9, 10) versehen sind, die einstückig angeformte Dichtungen (11,12) aus elastomerem Werkstoff aufweisen und daß zumindest eine der Platten (13, 14) eine - mit Ausnahme des Querschnitts des Saugkanals (5) - ihre Fügefläche (9, 10) folienartig dünn und flächig überdeckende Dichtung (11) aufweist, die mit einer dem Querschnitt des Saugkanals (5) entsprechenden Ausnehmung (16) versehen ist.

2. Heizmodul für eine gemischverdichtende Verbrennungskraftmaschine, das zwischen einem Ansaugrohr (3) und einem Zylinderkopf (4) der Verbrennungskraftmaschine (2) angeordnet ist, wobei das Ansaugrohr (3), das Heizmodul (1) und der Zylinderkopf (4) zumindest einen Saugkanal (5) begrenzen, in dem zumindest ein elektrisch beheizbares Heizelement (6) angeordnet ist, das einen Bestandteil des Heizmoduls (1) bildet, wobei das Heizmodul (1) mit Anschlußklemmen (23) an eine elektrische Stromquelle anschließbar ist, und wobei die Fügeflächen (9, 10) zwischen dem Ansaugrohr (3), dem Heizmodul (1) und dem Zylinderkopf (4) jeweils durch zumindest eine Dichtung (17, 19, 20) abgedichtet sind, wobei das Heizmodul (1) aus zumindest einer folienartig dünnen Platte (13, 14) aus metallischem Werkstoff besteht, wobei auf der Platte (13, 14) eine Leiterbahn (15) aus elektrisch leitfähigem Werkstoff befestigt ist und wobei die Dichtungen (17, 19, 20) auf der dem Ansaugrohr (3) und der dem Zylinderkopf (4) zugewandten Seite einstückig mit dem Heizmodul (1) ausgebildet sind, **dadurch gekennzeichnet, daß** zumindest eine der Platten (13, 14) mit einem im wesentlichen wulstförmig Dichtvorsprung (17) versehen ist, der auf seiner der Fügefläche (9, 10) der Platte (13, 14) abgewandten Seite eine Dichtfläche (17.1) aufweist, und daß der Dichtvorsprung (17) entlang der Außenkontur (18) der Platte (13, 14) angeordnet ist und den Saugkanal (5) dichtend umschließt.

3. Heizmodul nach Anspruch 2, dadurch gekennzeichnet, daß der Dichtvorsprung (17) zweiteilig ausgebildet ist, daß ein erster Teil (19) entlang der Außenkontur (18) der Platte (13, 14) angeordnet ist und ein zweiter Teil (20) den Saugkanal (5) dichtend umschließt.

4. Heizmodul nach einem der Ansprüche 1 bis 3, gekennzeichnet durch zwei Platten (13, 14), zwischen denen die Leiterbahn (15) angeordnet ist.

5. Heizmodul nach einem der Ansprüche 1 bis 4, dadurch gekennzeichnet, daß die Leiterbahn (15) mit zumindest einer der Platten (13, 14) adhäsiv verbunden ist.

6. Heizmodul nach einem der Ansprüche 1 bis 5, dadurch gekennzeichnet, daß die Platten (13, 14) eine Dicke von 0,2 bis 1,5 mm aufweisen und aus einer Aluminiumlegierung bestehen.

7. Heizmodul nach einem der Ansprüche 1 und 3 bis 6, dadurch gekennzeichnet, daß die Dichtungen (11, 12) entlang der Außenkontur (18) und umfangsseitig um den Saugkanal (5) eine wulstförmige Verdickung aufweisen.

8. Heizmodul nach einem der Ansprüche 2 und 3 bis 6, dadurch gekennzeichnet, daß der Dichtvorsprung (17) entlang der Außenkontur (18) und umfangsseitig um den Saugkanal (5) herumgespritzt ist.

## Claims

1. A heating device for a mixture-compressing internal combustion engine, which is arranged between an intake manifold (3) and a cylinder head (4) of the internal combustion engine (2), the intake manifold (3), the heating device (1) and the cylinder head (4) delimiting at least one intake passage (5) in which at least one electrically heatable heating element (6) forming a component of the heating device (1) is arranged, the heating device (1) being connectable to an electrical power source using connection terminals (23), and the joint faces (9, 10) between the intake manifold (3), the heating device (1) and the cylinder head (4) each being sealed by means of at least one seal (11, 12), the heating device (1) comprising at least one plate (13, 14) which is thin in the manner of a foil and is made of metallic material, a conductor track (15) made of electrically conductive material being attached to the plate (13, 14), and the seals (11, 12) being formed integrally with the heating device (1) on the side facing the intake manifold (3) and on the side facing the cylinder head (4), characterised in that the plates (13, 14) are provided with joint faces (9, 10) which have integrally formed seals (11, 12) made of elastomer material, and in that at least one of the plates (13, 14) has a seal (11) which, with the exception of the cross-section of the intake passage (5), covers its joint faces (9, 10) in a thin and planar fashion in the manner of a foil and which is provided with a recess (16) which corresponds to the cross-section of the intake passage (5).

2. A heating device for a mixture-compressing internal combustion engine, which is arranged between an intake manifold (3) and a cylinder head (4) of the internal combustion engine (2), the intake manifold (3), the heating device (1) and the cylinder head (4) delimiting at least one intake passage (5) in which at least one electrically heatable heating element (6) forming a component of the heating device (1) is arranged, the heating device (1) being connectable to an electrical power source using connection terminals (23), and the joint faces (9, 10) between the intake manifold (3), the heating device (1) and the cylinder head (4) each being sealed by means of at least one seal (17, 19, 20), the heating device (1) comprising at least one plate (13, 14) which is thin in the manner of a foil and is made of metallic material, a conductor track (15) made of electrically conductive material being attached to the plate (13, 14), and the seals (17, 19, 20) being formed integrally with the heating device (1) on the side facing the intake manifold (3) and on the side facing the cylinder head (4), characterised in that at least one of the plates (13, 14) is provided with an essentially bead-shaped sealing projection (17) which has a sealing face (17.1) on its side facing away from the joint face (9, 10) of the plate (13, 14,), and in that the sealing projection (17) is arranged along the outer contour (18) of the plate (13, 14) and surrounds the intake passage (5) in a sealing fashion.

3. A heating device according to claim 2, characterised in that the sealing projection (17) is of two-part design, in that a first part (19) is arranged along the outer contour (18) of the plate (13, 14), and a second part (20) surrounds the intake passage (5) in a sealing fashion.

4. A heating device according to any of claims 1 to 3, characterised by two plates (13, 14) between which the conductor track (15) is arranged.

5. A heating device according to any of claims 1 to 4, characterised in that the conductor track (15) is adhesively connected to at least one of the plates (13, 14).

6. A heating device according to any of claims 1 to 5, characterised in that the plates (13, 14) have a thickness of 0.2 to 1.5mm and are made of an aluminium alloy.

7. A heating device according to claim 1 or any of claims 3 to 6, characterised in that the seals (11, 12) have a bead-shaped thickening along the outer contour (18) and around the intake passage (5) on the circumference.

8. A heating device according to claim 2 or any of claims 3 to 6, characterised in that the sealing projection (17) is encapsulated by injection moulding along the outer contour (18) and around the intake passage (5) on the circumference.

## Revendications

1. Module de chauffage pour un moteur à combustion interne comprimant le mélange, qui est disposé entre une tubulure d'aspiration (3) et une tête de cylindre (4) du moteur à combustion interne (2), dans lequel la tubulure d'aspiration (3), le module de chauffage (1) et la tête de cylindre (4) limitent au moins une conduite d'aspiration (5), dans lequel est disposé au moins un élément de chauffage (6) pouvant être chauffé électriquement, qui forme une partie constitutive du module de chauffage (1), dans lequel le module de chauffage (1) peut être raccordé par des bornes de raccord (23) à une source de courant électrique, et dans lequel les surfaces d'assemblage (9, 10) entre la tubulure d'aspiration (3), le module de chauffage (1) et la tête de cylindre (4) sont à chaque fois rendues étanches par au moins une garniture (11, 12), dans lequel le module de chauffage (1) se compose d'au moins une plaque mince du type feuille (13, 14) en matière métallique, dans lequel une piste conductive (15) en matière électriquement conductrice est fixée sur la plaque (13, 14) et dans lequel les garnitures (11, 12) sont conçues sur le côté orienté vers la tubulure d'aspiration (3) et le côté orienté vers la tête de cylindre (4) d'une seule pièce avec le module de chauffage (1), caractérisé en ce que les plaques (13, 14) sont dotées de surfaces d'assemblage (9, 10), qui présentent des garnitures formées d'une seule pièce (11, 12) en matière élastomère et en ce qu'au moins l'une des plaques (13, 14) présente une garniture (11) recouvrant de façon mince et en surface sous forme de feuille sa surface d'assemblage (9, 10) - à l'exception de la section transversale de la conduite d'aspiration (5) -, ladite garniture étant dotée d'un évidement (16) correspondant à la section transversale de la conduite d'aspiration (5).

2. Module de chauffage pour un moteur à combustion interne comprimant le mélange, qui est disposé entre une tubulure d'aspiration (3) et une tête de cylindre (4) du moteur à combustion interne (2), la tubulure d'aspiration (3), le module de chauffage (1) et la tête de cylindre (4) limitant au moins une conduite d'aspiration (5), dans lequel est disposé au moins un élément de chauffage (6) pouvant être chauffé électriquement, qui forme une partie constitutive du module de chauffage (1), dans lequel le module de chauffage (1) peut être raccordé par des bornes de raccord (23) à une source de courant électrique, et dans lequel les surfaces d'assemblage (9, 10) entre la tubulure d'aspiration (3), le module de chauffage (1) et la tête de cylindre (4) sont à chaque fois rendues étanches par au moins une garniture (17, 19, 20), dans lequel le module de chauffage (1) se compose d'au moins une plaque mince du type feuille (13, 14) en matière métallique, dans lequel une piste conductive (15) en matière électriquement conductrice est fixée sur la plaque (13, 14) et dans lequel les garnitures (17, 19, 20) sont conçues sur le côté orienté vers la tubulure d'aspiration (3) et le côté orienté vers la tête de cylindre (4) d'une seule pièce avec le module de chauffage (1), caractérisé en ce qu'au moins l'une des plaques (13, 14) est dotée d'une saillie d'étanchéité (17) essentiellement en forme de bourrelet, qui présente une surface d'étanchéité (17.1) sur son côté opposé à la surface d'assemblage (9, 10) de la plaque (13, 14), et en ce que la partie en saillie d'étanchéité (17) est disposée le long du profil extérieur (18) de la plaque (13, 14) et entoure la conduite d'aspiration (5) de façon étanche.

3. Module de chauffage selon la revendication 2, caractérisé en ce que la saillie d'étanchéité (17) est conçue en deux parties, en ce qu'une première partie (19) est disposée le long du profil extérieur (18) de la plaque (13, 14) et en ce qu'une deuxième partie (20) entoure la conduite d'aspiration (5) de façon étanche.

4. Module de chauffage selon l'une des revendications 1 à 3, caractérisé par deux plaques (13, 14), entre lesquelles est disposée la piste conductive (15).

5. Module de chauffage selon l'une des revendications 1 à 4, caractérisé en ce que la piste conductive (15) est reliée de façon adhésive à au moins l'une des plaques (13, 14).

6. Module de chauffage selon l'une des revendications 1 à 5, caractérisé en ce que les plaques (13, 14) présentent une épaisseur de 0,2 à 1,5 mm et sont composées d'un alliage d'aluminium.

7. Module de chauffage selon l'une des revendications 1 et 3 à 6, caractérisé en ce que les garnitures (11, 12) présentent un épaississement en forme de bourrelet le long du profil extérieur (18) et sur la circonférence autour de la conduite d'aspiration (5).

8. Module de chauffage selon l'une des revendications 2 et 3 à 6, caractérisé en ce que la saillie d'étanchéité (17) est moulée par injection le long du profil extérieur (18) et sur la circonférence autour de la conduite d'aspiration (5).
